# EUROPÄISCHE PATENTANMELDUNG

(11) **EP 4 005 401 A1**
(43) Veröffentlichungstag der Anmeldung: **01.06.2022**
(21) Anmeldenummer: 21209971.7
(22) Anmeldetag: 23.11.2021
(51) Int. Cl.: A23L 13/60

(54) **WURSTPRODUKT, GEBILDET AUS ODER UMFASSEND GEWÜRZTE ROHWURST UND ZERKLEINERTES DÖRRFLEISCH, SOWIE VERFAHREN ZUR HERSTELLUNG DES WURSTPRODUKTS**

(30) Priorität: 25.11.2020 DE 202020106797 U
(71) Anmelder: Suntat Europe GmbH, 68199 Mannheim (DE)
(72) Erfinder: Baklan, Kadir, 68199 Mannheim (DE)
(74) Vertreter: Metten, Karl-Heinz

(57) **Zusammenfassung**

Die vorliegende Erfindung betrifft ein Wurstprodukt, umfassend gewürzte Rohwurst, enthaltend Rind-, Kalb- und/oder Lammfleisch, und zerkleinertes Dörrfleisch. Ferner betrifft die Erfindung ein Verfahren zur Herstellung des erfindungsgemäßen Wurstprodukts, umfassend das Verreiben von Gewürzen zu einer Paste und Untermengen der verriebenen Gewürze zu zerkleinertem Rind-, Kalb- und/oder Lammfleisch, das Kneten der erhaltenen Mischung, das Vermischen mit Dörrfleisch und das Einfüllen der erhaltenen Fleischmasse in eine Darmumhüllung unter Erhalt des Wurstprodukts. Außerdem betrifft die Erfindung die Verwendung von gewürzter Rohwurst, enthaltend Rind-, Kalb- und/oder Lammfleisch, und zerkleinertem Dörrfleisch für die Herstellung eines Wurstprodukts.

## Beschreibung

Die vorliegende Erfindung betrifft ein Wurstprodukt, insbesondere Sucuk, gebildet aus oder umfassend gewürzte Rohwurst enthaltend Rind-, Kalb- und/oder Lammfleisch und zerkleinertes Dörrfleisch, insbesondere Rinder-, Ziegen- und/oder Kamel-Dörrfleisch, insbesondere Pastirma, sowie ein Verfahren zur Herstellung des erfindungsgemäßen Wurstprodukts und ein Wurstprodukt hergestellt nach dem erfindungsgemäßen Verfahren.

Sucuk ist eine luftgetrocknete, in manchen Fällen auch geräucherte, Rohwurst umfassend Rind-, Kalb- oder Lammfleisch oder auch beliebige Mischungen hiervon und ist meistens scharf gewürzt, insbesondere mittels Knoblauch. Verzehrt werden kann sie kalt oder warm, wobei die Sucuk hauptsächlich als Kangal-Sucuk (Kringel-Sucuk), Parmak-Sucuk (parallel verbundene "Finger"-Sucuk) oder Büfe-Sucuk (Buffet-Sucuk) hergestellt wird.

Trotz ihrer Beliebtheit ist die Sucuk, insbesondere für ein luftgetrocknetes Wurstprodukt, besonders kalorien- und fettreich. 100 g traditionelle Sucuk weisen in etwa 350 kcal auf, enthalten im Wesentlichen etwa ein Drittel an Fett und nur etwa 15 g an Eiweiß. Im Zusammenhang hiermit steigt momentan immer mehr die Nachfrage an "High-Protein"-Lebensmitteln. Die erhöhte Zufuhr von Proteinen durch Lebensmittel findet in vielen Abnehmkonzepten aber auch in Bereich der Sportlernahrung Anklang. Dabei sollen die Proteine als wichtige kalorienarme Energielieferanten wirken, die lange satt machen und den Muskelaufbau unterstützen.

Um der Nachfrage gerecht zu werden, werden zum einen alternative Ersatzprodukte auf den Markt gebracht, die jedoch oftmals nicht mit den Originalprodukten hinsichtlich Form, Aussehen und allen voran dem Geschmack konkurrieren können. Zum anderen wird versucht, die Rezepturen traditioneller Lebensmittel dahingehend abzuändern, dass diese mehr Proteine und weniger Fett enthalten bei gleichbleibendem Geschmack.

Der vorliegenden Erfindung lag daher die Aufgabe zugrunde, ein Wurstprodukt, insbesondere Sucuk, bereitzustellen, welches im Vergleich zum traditionellen Wurstprodukt weniger Fett enthält und einen höheren Gehalt an Proteinen aufweist. Weiterhin soll das Produkt seinen würzigen Geschmack beibehalten.

Demgemäß wurde ein Wurstprodukt, gebildet aus oder umfassend gewürzte Rohwurst enthaltend Rind-, Kalb- und/oder Lammfleisch, insbesondere Rind- und Lammfleisch, und zerkleinertes Dörrfleisch, insbesondere Rinder-, Ziegen- und/oder Kamel-Dörrfleisch gefunden, wobei durch den Zusatz von zerkleinertem Dörrfleisch, insbesondere Pastirma, der Fettgehalt reduziert, der Proteingehalt erhöht und der würzige Geschmack verfeinert werden kann.

Ein "Wurstprodukt" im Sinne der vorliegenden Erfindung kann sowohl ein Zwischenprodukt in der Wurstherstellung darstellen, als auch das finale, zum Verzehr geeignete, Wurstprodukt. Ein Zwischenprodukt in der Wurstherstellung entsteht beispielsweise durch Einfüllen einer Fleischmasse in eine Darmumhüllung. Dieses muss noch nicht verzehrfertig sein, kann aber beispielsweise schon als Zwischenprodukt gehandelt werden. Das finale, zum Verzehr geeignete, Wurstprodukt entsteht nach Umröten, Lagern und gegebenenfalls Ausreifen des Zwischenprodukts. Als Umröten bezeichnet man bei der Wurstherstellung im Allgemeinen den Prozess, bei dem das Fleisch seine ansprechend hitzestabile rote Farbe bekommt. Ohne an eine Theorie gebunden zu sein, wird davon ausgegangen, dass hierbei eine chemische Reaktion zwischen Nitrit bzw. Stickoxid und dem Fleischfarbstoff Myoglobin stattfindet.

"Dörrfleisch" im Sinne der vorliegenden Erfindung beschreibt insbesondere Pastirma aus Rinder-, Ziegen- und/oder Kamelfleisch, kann aber auch jegliche andere getrocknete Fleischspezialität mit einem reduzierten Fett- und erhöhtem Proteingehalt umfassen, wie beispielsweise Beef Jerky. Zur Herstellung wird hierbei frisch geschlachtetes Fleisch in Stücke geschnitten, eingesalzen und über mehrere Stunden oder Tage gepökelt. Danach wird das Salz abgewaschen und die Fleischstücke an der Luft für mehrere Tage vorgetrocknet. Nach dem Vortrocknen wird das Fleisch vorzugsweise mit einer Gewürzpaste mariniert und anschließend noch einmal mehrere Tage getrocknet. 100 g an Dörrfleisch weisen in etwa 130 g kcal auf, bestehen zu etwa einem Drittel aus Eiweiß und enthalten nur etwa 1 bis 2 g Fett.

In einer zweckmäßigen Ausgestaltung des erfindungsgemäßen Wurstprodukts enthält dieses ferner Geflügelfleisch, insbesondere Hähnchenfleisch und/oder Putenfleisch. Geflügelfleisch gilt als besonders zarte und magere Fleischvariante und weist im Vergleich zu beispielsweise Schweine- oder Rindfleisch einen sehr dezenten Eigengeschmack auf. So kann der Fettanteil durch den teilweisen Austausch von Rind-, Kalb- und/oder Lammfleisch durch Geflügelfleisch noch weiter gesenkt werden.

In einer bevorzugten Ausgestaltung des erfindungsgemäßen Wurstprodukts umfasst die gewürzte Rohwurst Sucuk oder stellt diese dar. Ebenfalls bevorzugt umfasst das zerkleinerte Dörrfleisch Pastirma oder stellt dieses dar.

Bevorzugt umfasst das erfindungsgemäße Wurstprodukt neben der Rohwurst und dem zerkleinerten Dörrfleisch auch noch ein, insbesondere mehrere, Gewürze. Traditionell wird hierbei Knoblauch in Kombination mit einem oder mehreren Gewürzen verwendet ausgewählt aus der Gruppe bestehend aus Salz, Pfeffer, Cayennepfeffer, Paprikapulver, Bockshornklee, Piment, Zimt, Kreuzkümmel, Senf und beliebige Mischungen, wobei auch Knoblauch-freie Varianten bekannt, jedoch nicht bevorzugt, sind.

Das erfindungsgemäße Wurstprodukt umfasst zur besseren Verarbeitung und Haltbarkeit in einer zweckmäßigen Ausgestaltung ferner weitere Additive ausgewählt aus der Gruppe bestehend aus Farbstabilisatoren, Konservierungsmitteln, Antioxidantien, Geschmacksverstärkern, Dextrose, Laktose, Säuerungsmitteln, Farbstoffen und beliebigen Mischungen hiervon. Dabei ist die Zusammensetzungen der Additive je nach Verwendung bestimmter Fleischsorten und dem damit einhergehenden Herstellungsverfahren dem Fachmann geläufig.

In einer geeigneten Ausführungsform des erfindungsgemäßen Wurstprodukts umfasst der Anteil an zerkleinertem Dörrfleisch höchstens 20 Gew.-%, insbesondere höchstens 10 Gew.-% und bevorzugt höchstens 5 Gew.-%, bezogen auf das Gesamtgewicht des Wurstprodukts. Es wurde herausgefunden, dass mit diesen Anteilen an zerkleinertem Dörrfleisch, die Konsistenz und Festigkeit des Wurstprodukts im Vergleich zum Wurstprodukt ohne Dörrfleisch, nicht negativ beeinflusst wird. Weiterhin ist auch kein negativer Beigeschmack bemerkbar. Vielmehr wird dieser Anteil an zerkleinertem Dörrfleisch im Wurstprodukt von den Konsumenten als feinwürziger und delikater im Vergleich zum Produkt ohne Dörrfleisch empfunden.

Um keine negative Beeinflussung von Konsistenz und Festigkeit, sondern stattdessen ein angenehmes Mundgefühl zu generieren, hat es sich als zweckmäßig erwiesen, wenn das zerkleinerte Dörrfleisch in Form von Dörrfleischstücken, insbesondere im Wesentlichen gleichmäßig verteilt, in der gewürzten Rohwurst vorliegt. Bevorzugt ist dabei eine mittlere maximale, insbesondere die absolute maximale, Erstreckung der Dörrfleischstücke im Bereich von 0,1 bis 1 cm, insbesondere im Bereich von 0,2 bis 0,5 cm. Größere Stücke an Dörrfleisch werden vom Konsumenten andernfalls als Fremdkörper wahrgenommen, insbesondere als Knorpel, und mit einer minderen Fleischverarbeitung assoziiert.

In einer bevorzugten Ausführungsform des erfindungsgemäßen Wurstprodukts ist dieses im Wesentlichen frei von Nitritpökelsalz. Dieses dient in der Wurstproduktion zwar häufig dem Haltbarmachen der Waren, steht aber auch im Verdacht krebserregend zu sein. Während Nitritpökelsalz in Brühwürsten, wie beispielsweise Wiener Würstchen oder Lyoner Wurst für den angenehm salzigen Geschmack und die rosa Farbe sorgt und gewisse Mengen in solchen Wurstprodukten enthalten sein müssen, kann in der Herstellung des erfindungsgemäßen Wurstprodukts in Form einer gut gewürzten getrockneten Rohwurst zum Großteil darauf verzichtet werden ohne Einbußen im Geschmack. In einer bevorzugten Ausgestaltung des erfindungsgemäßen Wurstprodukts enthält dieses daher nur geringe Mengen an Nitritpökelsalz. Alternativ sind aber auch Varianten des erfindungsgemäßen Wurstprodukts denkbar, die vollständig frei von Nitritpökelsalz sind.

In einer zweckmäßigen Ausgestaltung des erfindungsgemäßen Wurstprodukts umfasst dieses ferner eine Darmumhüllung, insbesondere einen Rinderkranzdarm. Wie bereits beschrieben wird dieser beim Trocknen vorzugweise in die Form eines Kringels oder zweier parallel laufender Würste gebracht. Alternativ ist auch die Verwendung eines Kunstdarms möglich.

Die der Erfindung zugrunde liegende Aufgabe wird weiterhin gelöst durch ein Verfahren zur Herstellung des erfindungsgemäßen Wurstprodukts und einem erfindungsgemäßen Wurstprodukt hergestellt nach dem folgenden Verfahren, umfassend, insbesondere in dieser Reihenfolge, die Schritte:
i) Zurverfügungstellung und Zerkleinern, insbesondere Wolfen, des Rindfleisches, Kalbfleisches und/oder Lammfleisches und gegebenenfalls des Geflügelfleisches oder beliebigen Mischungen hiervon,
ii) Zurverfügungstellung von zerkleinertem Dörrfleisch
iii) Verreiben von Gewürzen; insbesondere ausgewählt aus der Gruppe, bestehend aus Salz, Pfeffer, Cayennepfeffer, Paprikapulver, Bockshornklee, Piment, Zimt, Kreuzkümmel, Senf und beliebigen Mischungen hiervon, oder bevorzugt Knoblauch in Kombination mit einem oder mehreren Gewürzen ausgewählt aus der Gruppe, bestehend aus Salz, Pfeffer, Cayennepfeffer, Paprikapulver, Bockshornklee, Piment, Zimt, Kreuzkümmel, Senf und beliebige Mischungen hiervon; besonders bevorzugt Knoblauch, zu einer Paste und Untermengen zu der Mischung aus i),
iv) gegebenenfalls Zugabe weiterer Gewürze und/oder Additive und/oder Zucker,
v) Kneten der Mischung nach iii) oder iv),
vi) Vermischen des zerkleinerten Dörrfleisches nach ii), insbesondere der Pastirma, mit der Mischung gemäß v) und
vii) Einfüllen der Fleischmasse nach vi) in eine Darmumhüllung unter Erhalt des Wurstprodukts.

In einer zweckmäßigen Ausführungsform des erfindungsgemäßen Verfahrens umfasst dieses weiterhin die folgenden Schritte, insbesondere in dieser Reihenfolge:
viii) Umröten des nach Schritt vii) erhaltenen Wurstprodukts, insbesondere bei mindestens 24 h und einer Luftfeuchtigkeit größer 70 %,
ix) weitere Lagerung des Wurstprodukts, insbesondere bei Temperaturen im Bereich von 10 bis 20 °Cund einer Luftfeuchtigkeit größer 70%, insbesondere mindestens 7 Tagen, und
x) gegebenenfalls weiteres Ausreifen des Wurstprodukts über mehrere Wochen, insbesondere mindestens zwei oder drei Wochen, vorzugsweise mindestens drei Wochen.

Mit dem erfindungsgemäßen Wurstprodukt und dem erfindungsgemäßen Verfahren zur Herstellung des erfindungsgemäßen Wurstprodukts geht die überraschende Erkenntnis einher, dass ein einfaches, gesundheitlich unbedenkliches Zusatzmittel für Wurstprodukte auf Rohwurstbasis in Form von zerkleinertem Dörrfleisch bereitgestellt werden kann, wobei das Wurstprodukt mit dem zerkleinerten Dörrfleisch einen verringerten Kalorien- und Fettanteil, einen erhöhten Proteinanteil und einen vergleichbaren Geschmack, sowie eine vergleichbare Konsistenz aufweist.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wurstprodukt, gebildet aus oder umfassend gewürzte Rohwurst enthaltend Rind-, Kalb- und/oder Lammfleisch, insbesondere Rind- und Lammfleisch, und zerkleinertes Dörrfleisch, insbesondere Rinder-, Ziegen- und/oder Kamel-Dörrfleisch.

2. Wurstprodukt nach Anspruch 1, **dadurch gekennzeichnet, dass**
die gewürzte Rohwurst ferner Geflügelfleisch enthält.

3. Wurstprodukt nach Anspruch 1 oder 2, **dadurch gekennzeichnet, dass**
dieses Knoblauch, Salz, Pfeffer, Cayennepfeffer, Paprikapulver, Bockshornklee, Piment, Zimt, Kreuzkümmel, Senf und beliebige Mischungen hiervon umfasst.

4. Wurstprodukt nach einem der vorangehenden Ansprüche, ferner umfassend Additive ausgewählt aus der Gruppe bestehend aus Farbstabilisatoren, Konservierungsmitteln, Antioxidantien, Geschmacksverstärkern, Dextrose, Laktose, Säuerungsmitteln, Farbstoffen und beliebigen Mischungen hiervon.

5. Wurstprodukt nach einem der vorangehenden Ansprüche, **dadurch gekennzeichnet, dass**
der Anteil an zerkleinertem Dörrfleisch höchstens 20 Gew.-% umfasst, insbesondere höchstens 10 Gew.-%, bevorzugt höchstens 5 Gew.-%, bezogen auf das Gesamtgewicht des Wurstprodukts.

6. Wurstprodukt nach einem der vorangehenden Ansprüche, **dadurch gekennzeichnet, dass**
das zerkleinerte Dörrfleisch in Form von Dörrfleischstücken, insbesondere im Wesentlichen gleichmäßig verteilt, in der gewürzten Rohwurst vorliegt.

7. Wurstprodukt nach Anspruch 6, **dadurch gekennzeichnet, dass**
die mittlere maximale, insbesondere die absolute maximale, Erstreckung der zerkleinerten Dörrfleischstücke im Bereich von 0,1 bis 1 cm, insbesondere im Bereich von 0,2 bis 0,5 cm, liegt.

8. Wurstprodukt nach einem der vorangehenden Ansprüche, **dadurch gekennzeichnet, dass**
dieses im Wesentlichen frei von Nitritpökelsalz ist.

9. Wurstprodukt nach einem der vorangehenden Ansprüche, ferner umfassend eine Darmumhüllung, insbesondere einen Rinderkranzdarm.

10. Wurstprodukt nach einem der vorangehenden Ansprüche, **dadurch gekennzeichnet, dass**
die gewürzte Rohwurst Sucuk und/oder dass das zerkleinerte Dörrfleisch Pastirma umfasst oder darstellt.

11. Wurstprodukt nach einem der vorangehenden Ansprüche, **dadurch gekennzeichnet, dass**
die Gewürze der gewürzten Rohwurst ausgewählt sind aus der Gruppe bestehend aus Salz, Pfeffer, Cayennepfeffer, Paprikapulver, Bockshornklee, Piment, Zimt, Kreuzkümmel, Senf, Knoblauch und beliebigen Mischungen hiervon.

12. Verfahren zur Herstellung eines Wurstprodukts, insbesondere nach einem der vorangehenden Ansprüche, umfassend, insbesondere in dieser Reihenfolge, die Schritte:
i) Zurverfügungstellung und Zerkleinern, insbesondere Wolfen, von Rindfleisch, Kalbfleisch und/oder Lammfleisch und gegebenenfalls von Geflügelfleisch oder beliebigen Mischungen hiervon,
ii) Zurverfügungstellung von zerkleinertem Dörrfleisch
iii) Verreiben von Gewürzen; insbesondere ausgewählt aus der Gruppe, bestehend aus Salz, Pfeffer, Cayennepfeffer, Paprikapulver, Bockshornklee, Piment, Zimt, Kreuzkümmel, Senf und beliebigen Mischungen hiervon, oder bevorzugt Knoblauch in Kombination mit einem oder mehreren Gewürzen ausgewählt aus der Gruppe, bestehend aus Salz, Pfeffer, Cayennepfeffer, Paprikapulver, Bockshornklee, Piment, Zimt, Kreuzkümmel, Senf und beliebige Mischungen hiervon; besonders bevorzugt Knoblauch, zu einer Paste und Untermengen zu der Mischung aus i),
iv) gegebenenfalls Zugabe weiterer Gewürze und/oder Additive und/oder Zucker,
v) Kneten der Mischung nach iii) oder iv),
vi) Vermischen des zerkleinerten Dörrfleisches nach ii), insbesondere der Pastirma, mit der Mischung gemäß v) und
vii) Einfüllen der Fleischmasse nach vi) in eine Darmumhüllung unter Erhalt des Wurstprodukts.

13. Verfahren nach Anspruch 12, ferner umfassend die Schritte, insbesondere in dieser Reihenfolge:
viii) Umröten des nach Schritt vii) erhaltenen Wurstprodukts, insbesondere bei mindestens 24 h und einer Luftfeuchtigkeit größer 70 %,
ix) weitere Lagerung des Wurstprodukts, insbesondere bei Temperaturen im Bereich von 10 bis 20 °C und einer Luftfeuchtigkeit größer 70%, insbesondere mindestens 7 Tagen, und
x) gegebenenfalls weiteres Ausreifen des Wurstprodukts über mehrere Wochen, insbesondere mindestens zwei oder drei Wochen.

14. Wurstprodukt, erhalten oder erhältlich nach einem Verfahren gemäß Anspruch 12 oder 13.

15. Verwendung von gewürzter Rohwurst, enthaltend Rind-, Kalb- und/oder Lammfleisch, insbesondere Rind- und Lammfleisch, und zerkleinertem Dörrfleisch, insbesondere Rinder-, Ziegen- und/oder Kamel-Dörrfleisch, für die Herstellung eines Wurstprodukts.
